# EUROPEAN PATENT SPECIFICATION

(11) **EP 3 050 616 B1**
(45) Date of publication and mention of the grant of the patent: **29.11.2017**
(21) Application number: 16153039.9
(22) Date of filing: 27.01.2016
(51) Int. Cl.: B01F 7/00, A23G 9/12, A23G 9/22

(54) **ROTATABLE MIXING MEMBER FOR BATCH-FREEZER MACHINES**
DREHBARES MISCHELEMENT FÜR CHARGEN-GEFRIERMASCHINEN
ÉLÉMENT DE MÉLANGE ROTATIF POUR MACHINES DE CONGÉLATION EN LOT

(30) Priority: 27.01.2015 IT TV20150017
(43) Date of publication of application: 03.08.2016
(73) Proprietor: Valmar Global VSE ZA Sladoled D.O.O., 5293 Volcja Draga (SI)
(72) Inventor: JEJCIC, Valter, 5000 NOVA GORICA (SI)
(74) Representative: Bellemo, Matteo

(56) References cited:
- EP-A1- 0 275 335
- EP-A1- 0 386 323
- EP-A1- 2 708 142
- DE-A1- 4 426 589

## Description

The present invention relates to a rotatable mixing member for batch-freezer machines.

More specifically, the present invention relates to a rotatable mixing member for horizontal-axis batch-freezer machines for making artisan ice-cream and the like. Use to which the following disclosure specifically refers without however any loss of generality.

As is known, the majority of horizontal-axis batch-freezer machines used for making artisan ice-cream are provided with a substantially cylindrical-shaped creaming tank that extends horizontally inside the machine, from the front face of the machine; with a shutter hatch which is hinged to the front face of the machine so as to be able to rotate about a vertical axis, to and from a closed position in which the hatch closes the mouth of the creaming tank in a fluid-tight manner; and with a rotatable mixing member which extends inside the creaming tank coaxial to the longitudinal axis of the tank and is capable of rotating about the longitudinal axis thereof so as to amalgamate and mix the semisolid mixture that forms inside the creaming tank, and to simultaneously remove the ice-cream which adheres to the inner cylindrical surface of the creaming tank.

More in detail, in the majority of horizontal-axis batch-freezer machines currently available on the market, the rotatable mixing member basically consists of a rigid structure shaped substantially like a cylindrical cage and which is inserted in removable and axially rotatable manner inside the creaming tank and comprises: two central hubs which are arranged one beside the other, coaxial to the longitudinal axis of the mixing member, and are arranged close to the two axial ends of the creaming tank, both locally coaxial to the longitudinal axis of the tank; and a series of longitudinal plate-like blades which extend from one hub to the other parallel to the longitudinal axis of the mixing member, and are equally angularly spaced about the longitudinal axis of the mixing member. Each of the longitudinal plate-like blades is also oriented so that, when the mixing member is inserted in the creaming tank, one of the two major lateral edges is locally substantially tangent to the inner cylindrical surface of the creaming tank.

The rotatable mixing member is usually also provided with a series of tangential scraping paddles made of plastic material, each of which straddles the outer lateral edge of a corresponding longitudinal blade, so as to be locally substantially grazing the inner cylindrical surface of the creaming tank, and is flag hinged to the body of the blade so as to be able to swing about a reference axis locally parallel to and spaced from the outer lateral edge of the blade.

Lastly, each scraping paddle is provided with a couple of flexible metal tabs that cantilevered protrude from the body of the paddle and rest directly on the outer lateral edge of the blade, so as to push a lateral edge of the scraping paddle in elastic manner toward the outside of the mixing member, against the inner cylindrical surface of the creaming tank.

Unfortunately, to limit the production cost of the scraping paddles, the metal tabs are trapped in the body of the scraping paddle during the injection moulding of the piece, with all the drawbacks that this involves.

Breaking of even just one of the metal tabs, in fact, forces the user of the batch-freezer machine to replace the entire scraping paddle en bloc.

Moreover, experimental tests have shown that, during creaming of the ice-cream, the ice-cream tends to accumulate on the metal tabs of the scraping paddles, forming incrustations that can cause several problems. An excessive accumulation of ice-cream on the metal tabs, in fact, can result in the deformation and/or breakage of the tabs, and furthermore can make extremely difficult both extraction of the mixing member from the creaming tank and subsequent cleaning of the mixing member.

Aim of the present invention is therefore to eliminate the drawbacks linked with the use of the scraping paddles with protruding metal tabs.

In compliance to these aims, according to the present invention there is provided a rotatable mixing member for batch-freezer machines as defined in claim 1 and preferably, though not necessarily, in any one of the dependent claims.

According to the present invention there is also provided a batch-freezer machine for making artisan ice-cream and the like as defined in claim 14 and preferably, though not necessarily, in any one of the dependent claims.

Document EP-A1-2 708 142 discloses a rotatable mixing member in accordance with the preamble of claim 1.

The present invention will now be described with reference to the accompanying drawings, which illustrate an example of a non-limiting embodiment, in which:
- Figure 1 is a perspective view of a batch-freezer machine for making ice-cream provided with a rotatable mixing member realized according to the teachings of the present invention;
- Figure 2 is a perspective view of the rotatable mixing member shown in Figure 1;
- Figure 3 is a front view of the rotatable mixing member shown in Figure 2;
- Figure 4 is an enlarged view of a part of the rotatable mixing member shown in Figure 2;
- Figure 5 is a section view of a part of the rotatable mixing member shown in Figures 1 to 4; whereas
- Figure 6 is a perspective view of one of the scraping paddles of the rotatable mixing member shown in Figures 1 to 5.

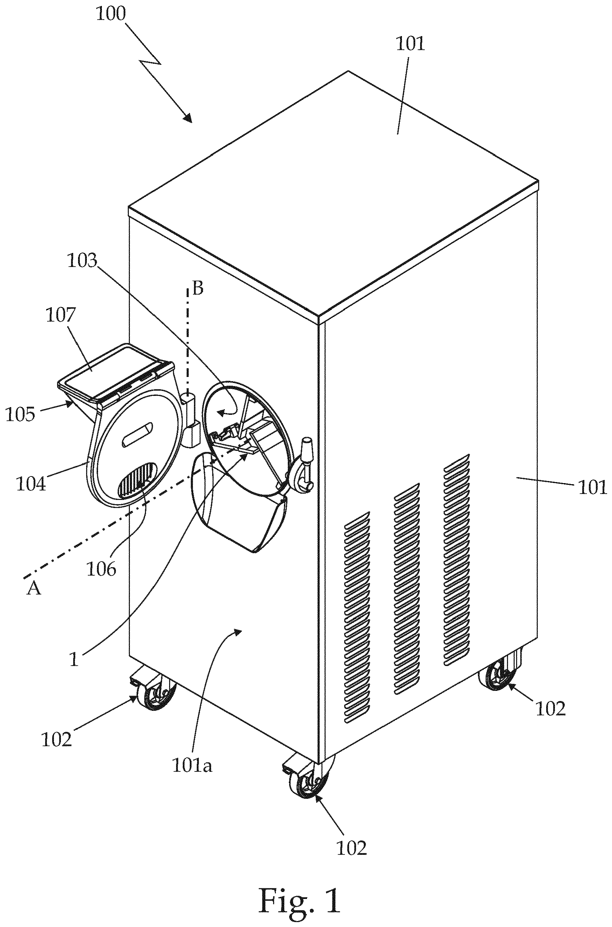

With reference to Figures 1, 2 and 3, reference number 1 indicates as a whole a rotatable mixing member particularly adapted to be housed in axially rotatable manner inside the creaming tank of a batch-freezer machine 100 for production of artisan ice-cream and the like, preferably of the horizontal-axis type.

More in detail, the batch-freezer machine 100 for production of artisan ice-cream and the like preferably comprises:
- an outer boxlike casing 101 which is preferably substantially parallelepiped in shape, and is preferably, though not necessarily, provided with ground-resting wheels 102;
- a substantially cylindrical-shaped, creaming tank 103 which has a capacity preferably ranging between 6 and 20 litres, and which extends inside the boxlike casing 101, starting from the front wall or facade 101a of the casing, while remaining locally coaxial to a reference axis A preferably substantially horizontal and preferably also locally substantially perpendicular to the front wall 101a of the outer boxlike casing 101; and
- a shutter hatch 104 which is movable to and from a closed position in which the body of the hatch 104 is able to close/plug the mouth/inlet of the creaming tank 103 in a fluid-tight manner.

In the example shown, in particular, hatch 104 is movably mounted on the front wall 101a of the boxlike casing 101, so as to be manually positionable by the user in the closed position thereof.

With reference to Figure 1, hatch 104 is moreover provided with two different gateways to the creaming tank, preferably vertically misaligned in relation to one another and structured so as to allow the user to, respectively, pour the ingredients required to make the ice-cream into the creaming tank 103 with the hatch 104 in the closed position, and to draw/extract the ice-cream from the creaming tank 103, always with the hatch 104 in the closed position, at the end of the batch-freezing process.

More in detail, in the example shown hatch 104 preferably consists of a disc-like body which is preferably hinged to the front wall 101a of the boxlike casing 101, at a side of the mouth/inlet of creaming tank 103, so as to be able to freely rotate about a preferably, though not necessarily, vertical, reference axis B, from and toward a closed position in which the hatch 104 is arranged in abutment on the front wall 101a of the boxlike casing 101 at the mouth/inlet of the creaming tank 103, so as to close the mouth of creaming tank 103 in a fluid-tight manner.

In addition, the hatch 104 is also provided with a feeding hopper 105 structured to allow the user to pour, while the hatch 104 blocks the mouth of the creaming tank 103, the ingredients required to make the ice-cream into the creaming tank 103; and an outlet neck 106 with a manually-operated guillotine closure, structured to allow the user to spill/draw the ice-cream out of the creaming tank 103 in a controlled manner at the end of the batch-freezing process, while the hatch 104 blocks the mouth/ inlet of the creaming tank 103.

Lastly, the hatch 104 is preferably also provided with a small plate-like lid 107, which is arranged to close in manually removable manner the inlet mouth of hopper 105.

With reference to Figure 1, the rotatable mixing member 1 extends inside the creaming tank 103 substantially coaxial to the tank longitudinal axis A, preferably substantially for the entire length of the creaming tank 103, and is pivoted on the bottom of the creaming tank 103 so as to be able to rotate about the longitudinal axis thereof.

Inside the boxlike casing 101, the batch-freezer machine 100 additionally comprises:
- an electric motor assembly (not visible in the Figures), which is capable of driving into rotation the mixing member 1 about the its longitudinal axis, i.e. about the longitudinal axis A of creaming tank 103; and
- an electric cooling assembly (not visible in the Figures), which is capable of bring and maintain the creaming tank 103, and the contents thereof, to/at a creaming temperature below 0 °C and preferably ranging between -10 °C and -35 °C.

Motor assembly and cooling assembly are components already widely known in the field of batch-freezer machines and are therefore not described in further details.

With reference to Figures 1, 2 and 3, the rotatable mixing member 1 is preferably inserted into the creaming tank 103 in manually extractable manner, and is overall structured so as to be able to amalgamate and mix, while rotating inside the creaming tank 103, the semisolid mixture that forms inside the creaming tank 103, and moreover to continuously remove the layer of ice-cream that sticks to the inner cylindrical surface 103i of creaming tank 103 during the low temperature batch-freezing process.

More in detail, the rotatable mixing member 1 firstly comprises a rigid structure 2 preferably shaped like a substantially cylindrical cage, which is substantially complementary in shape to that of the creaming tank 103 of batch-freezer machine 100, and is adapted to be inserted inside creaming tank 103 in axially rotatable manner about the longitudinal axis C thereof.

The rigid structure 2 is moreover provided with a plurality of plate-like longitudinal blades which are angularly spaced about the longitudinal axis C of rigid structure 2, and thus about the longitudinal axis of mixing member 1, and extend substantially parallel to longitudinal axis C so as to arrange a lateral edge, hereafter called outer lateral edge, substantially tangent to/grazing the inner cylindrical surface 103i of the creaming tank 103, preferably substantially for the whole length of creaming tank 103.

In the example shown, in particular, the rigid structure 2 shaped like a substantially cylindrical cage, preferably comprises: a front hub 3 and a rear hub 4 which are arranged one beside the other, locally coaxial to the longitudinal axis C of mixing member 1, and are suitably spaced to one another so as to be arranged, when the mixing member 1 is inside creaming tank 103, one close to the bottom of the creaming tank 103, and the other close to the inlet/mouth of the creaming tank 103; and a plurality of plate-like longitudinal blades 5 which are angularly spaced about the longitudinal axis C, and extend from the front hub 3 to the rear hub 4 substantially parallel to the longitudinal axis C of the mixing member 1.

Front hub 3 is preferably made of metal material, and is structured so as to be pivoted in an axially rotatable manner to the bottom of creaming tank 103. Rear hub 4 is preferably made of metal material, and is preferably structured so as to substantially rest in rolling manner on the hatch 104.

More in detail, in the example shown front hub 3 is preferably provided with a protruding central pin 6 which extends cantilevered and coaxial to the longitudinal axis C of mixing member 1, from the opposite side with respect to the rear hub 4, and is structured/dimensioned so as to fit into a revolving bushing (not visible in the Figures) which is fixed in axially rotatable manner onto the bottom of creaming tank 3, coaxial to the tank longitudinal axis A. The distal end 6a of protruding pin 6 is shaped so as to couple with the revolving bushing in an axially sliding and angularly rigid manner, whereas the revolving bushing is mechanically connected to the motor assembly so as to be driven into rotation by the motor assembly about the tank longitudinal axis A.

Preferably, the part of rear hub 4 that directly faces hatch 104 is, instead, shaped so as to form a centrifugal impeller which, while mixing member 1 rotates inside the creaming tank 103, is able to radially push, toward the inner lateral cylindrical surface 103i of creaming tank 103, the semisolid mixture which is at the inlet/mouth of the creaming tank 103.

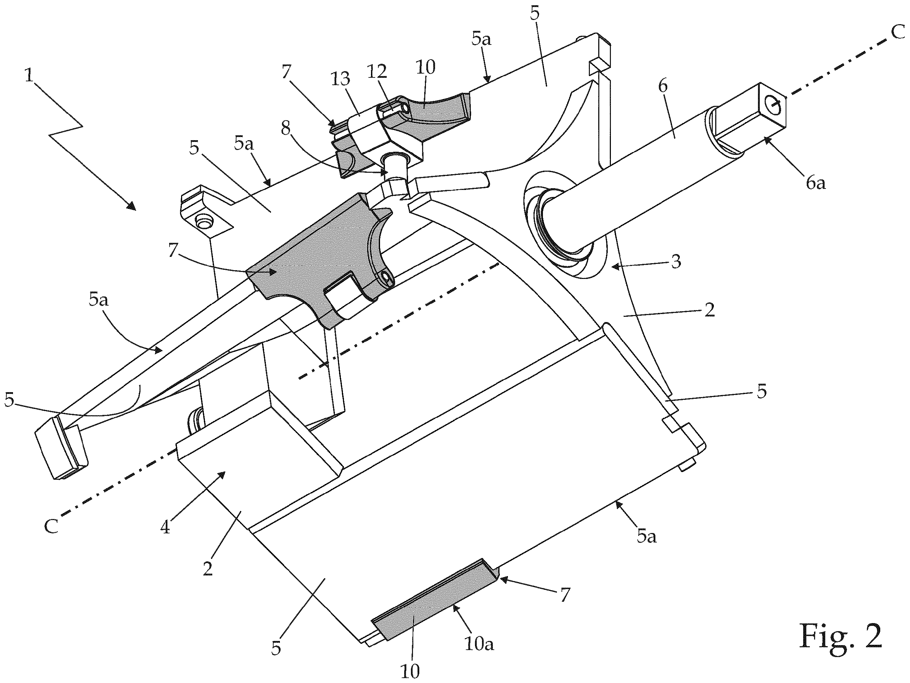

With reference to Figures 2, 3, 4, and 5, the plate-like longitudinal blades 5 are preferably made of metal material, and are fixed to hubs 3 and 4 in an inclined position so that, when the mixing member 1 is inserted into the creaming tank 103, one of the lateral edges thereof, hereafter called outer lateral edge 5a, is substantially tangent to/grazing the inner cylindrical surface 103i of creaming tank 103, substantially for the entire length of the creaming tank 103.

Preferably, the longitudinal blades 5 are moreover arranged angularly and equally spaced about the longitudinal axis C of rigid structure 2.

In the example shown, in particular, rigid structure 2 is preferably provided with three longitudinal blades 5, which are angularly and equally spaced about the longitudinal axis C of mixing member 1, and preferably also extend from front hub 3 to rear hub 4 following a substantially helicoidal trajectory.

With reference to Figures 2, 3, 4 and 5, the rotatable mixing member 1 is moreover provided with a series of tangential scraping paddles 7, which are located on the longitudinal blades 5 of rigid structure 2, close to the outer lateral edge 5a of the single blades; and a series of pushing assemblies 8 that are structured so as to push the individual scraping paddles 7 in elastic manner toward the outside of the rigid structure 2, in order to bring said scraping paddles 7 in abutment on the inner cylindrical surface 103i of the creaming tank 103.

In other words, each pushing assembly 8 is interposed between the scraping paddle 7 and the body of the longitudinal blade 5, and is structured so as to push the scraping paddle 7 in elastic manner against the inner cylindrical surface 103i of the creaming tank 103, so that the scraping paddle 7 can continuously scrape the inner cylindrical surface 103i of creaming tank 103 while the mixing member 1 rotates inside the creaming tank 103.

More in detail, at least one and preferably all of the scraping paddles 7 of mixing member 1 are hinged to the longitudinal blades 5, close to the outer lateral edge 5a of the individual blades, so as to be able to freely rotate about as many rotation axes D locally substantially parallel to the longitudinal axis C of rigid structure 2.

The pushing assemblies 8 are instead structured so as to rotate the individual scraping paddles 7 in elastic manner toward the outside of rigid structure 2, so as to bring the individual scraping paddles 7 in abutment on the inner cylindrical surface 103i of creaming tank 103.

With reference to Figures 2, 3, 4 and 5, in the example shown, in particular, each scraping paddle 7 is preferably hinged to the body of the corresponding longitudinal blade 5 so as to be able to freely swing about a rotation axis D locally substantially parallel to and spaced from the outer lateral edge 5a of the blade.

Preferably, each scraping paddle 7 furthermore extends straddling the outer lateral edge 5a of the corresponding longitudinal blade 5, in order to cantilevered protrude on opposite sides of the longitudinal blade 5, and preferably also so as to be locally substantially grazing/ tangent to the inner cylindrical surface 103i of creaming tank 103.

In the example shown, in particular, each scraping paddle 7 is hinged to a respective longitudinal blade 5, and preferably extends straddling the outer lateral edge 5a of the blade engaging in a pass-through manner a recess 11 specifically realized in the outer lateral edge 5a of the blade.

With reference to Figures 2, 3, 5 and 6, in the example shown, in particular, each scraping paddle 7 preferably consists of a plate-like body 10 preferably made of plastic material, which is flag hinged to the body of the longitudinal blade 5 so as to freely swing about a rotation axis D locally substantially parallel to and spaced from the outer lateral edge 5a of the blade, and lies straddling the outer lateral edge 5a of the same longitudinal blade 5 so as to cantilevered protrude on opposite sides of the longitudinal blade 5, and preferably also so as to be locally substantially grazing/tangent to the inner cylindrical surface 103i of creaming tank 103.

On the opposite side with respect to rotation axis D, the plate-like body 10 moreover has a substantially rectilinear and preferably also wedge-shaped, chisel lateral side/edge 10a which is locally substantially parallel to the outer lateral edge 5a of longitudinal blade 5, and thus to the rotation axis D of scraping paddle 7, and is structured so as to be arranged in abutment and then continuously slide on the inner cylindrical surface 103i of creaming tank 103.

In addition, the plate-like body 10 also straddles the outer lateral edge 5a of longitudinal blade 5 so that, during rotation of mixing member 1 inside the creaming tank 103, the chisel lateral edge 10a precedes the outer lateral edge 5a of the blade, and the outer lateral edge 5a of the blade precedes the rotation axis D of the same plate-like body 10.

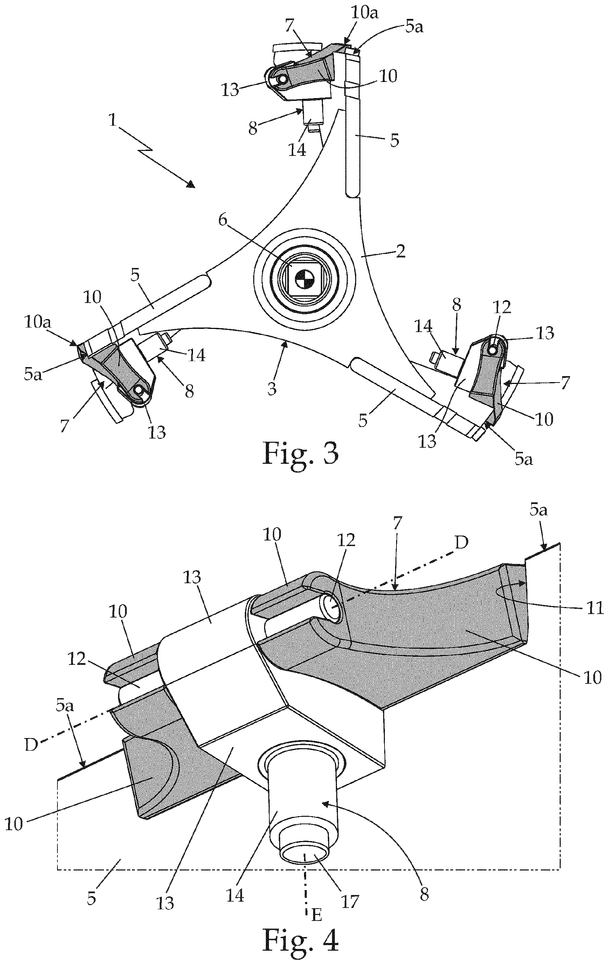

With particular reference to Figures 2 and 4, in the example shown, in particular, the scraping paddle 7 is preferably hinged to a rectilinear transversal pin 12 that extends coaxial to rotation axis D, and is inserted in a pass-through manner in a supporting appendage 13 that, in turn, cantilevered protrudes from the rear face of the longitudinal blade 5, preferably in a direction locally substantially perpendicular to the surface of the same rear face.

More in detail, in the example shown the plate-like body 10 is preferably pivotally joined in removable manner to the transversal rectilinear pin 12.

With reference to Figures 2, 3, 4 and 5 at least one and preferably all of the pushing assemblies 8 of mixing member 1 comprise: a preferably substantially tubular-shaped, housing member 14 which is firmly fixed to the body of longitudinal blade 5, underneath the scraping paddle 7, and is provided more or less centrally with a rectilinear hole 15 that extends coaxial to a reference axis E substantially perpendicular to the longitudinal axis C of rigid structure 2, i.e. substantially radial, and misaligned (that is to say laterally displaced) with respect to the rotation axis D of scraping paddle 7; a movable rod 17 which extends coaxial to the axis E of rectilinear hole 15, has a section complementary to that of rectilinear hole 15, and is inserted in axially sliding manner into the rectilinear hole 15; and an elastic element 18 which is preferably located inside the rectilinear hole 15, and is structured so as to push the movable rod 17 in elastic manner outside of the rectilinear hole 15 of housing member 14, toward the superjacent scraping paddle 7.

More in detail, the housing member 14 is preferably at least partially inserted/recessed inside a seat 16 specifically formed in the body of the longitudinal blade 5, below the scraping paddle 7, in an eccentric/misaligned position with respect to the rotation axis D of the scraping paddle 7.

Elastic element 18 in turn is structured to push the movable rod 17 in elastic manner outside of the housing member 14 toward the superjacent scraping paddle 7, so that the upper end 17a of movable rod 17 rests on the scraping paddle 7, i.e. on plate-like body 10, and moreover exerts a thrust f on the scraping paddle 7 in order to raise/move away the scraping paddle 7 from the outer lateral edge 5a of the longitudinal blade 5.

In the example shown, in particular, the housing member 14 preferably consists of a cylindrical tubular sleeve preferably made of metal material, which is fitted in pass-through and removable manner inside a pass-through hole 16 specifically realized in the supporting appendage 13 which protrudes cantilevered from the rear face of the longitudinal blade 5 and supports the transversal pin 12, in an eccentric position with respect to the rotation axis D of the scraping paddle 7, i.e. of the plate-like body 10. The sleeve 14 and the pass-through hole 16 are obviously coaxial to the axis E.

The movable rod 17, instead, is preferably inserted in sleeve 14 in a pass-through and axially sliding manner.

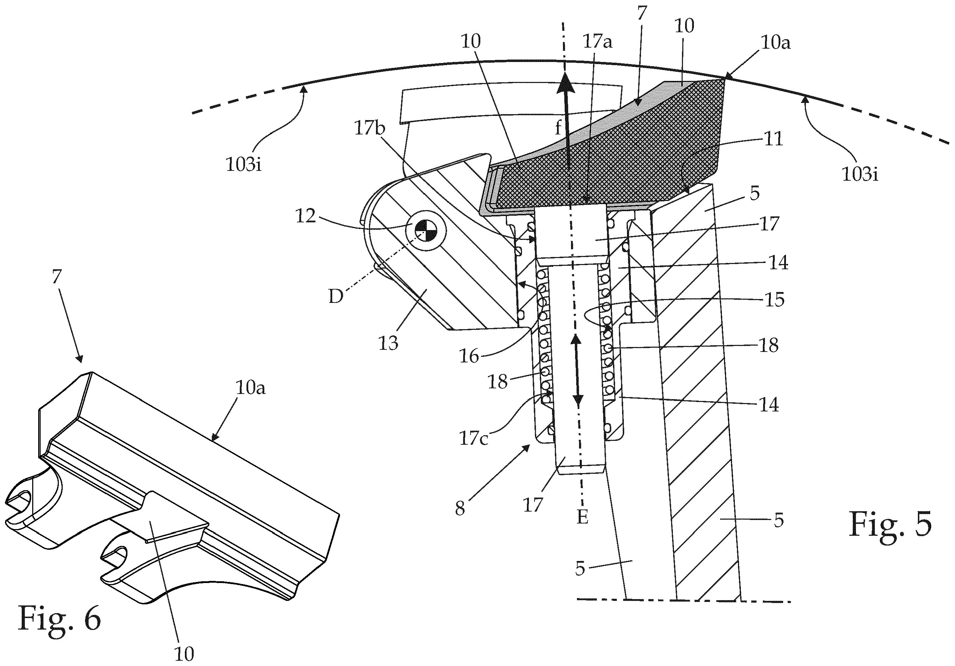

With reference to Figure 5, additionally the movable rod 17 is preferably divided into two segments of different diameter, and is inserted in axially sliding manner into the rectilinear hole 15 of housing member 14, i.e. of sleeve 14, with the large-diameter segment 17b facing the scraping paddle 7, i.e. the plate-like body 10, and with the small-diameter segment 17c facing the bottom of the rectilinear hole 15.

Elastic element 18, instead, is preferably substantially tubular in shape and is fitted on the small-diameter segment 17c of movable rod 17, inside the rectilinear hole 15, so as to have a first end in abutment on the bottom of the rectilinear hole 15, and a second end in abutment on the annular shoulder that joining the small-diameter segment 17c to the large-diameter segment 17b.

More in detail, in the example shown the tubular elastic element 18 preferably consists of a coil spring which is fitted directly on the small-diameter segment 17c of movable rod 17.

Alternatively, the tubular elastic element 18 may also consist of an elastically-deformable sleeve in elastomeric material.

Operation of rotatable mixing member 1 and of batch-freezer machine 101 is easily inferable from what disclosed above, and therefore does not require further explanations.

Advantages resulting from the particular structure of pushing assemblies 8 of rotatable mixing member 1 are large in number.

First of all, since the pushing assemblies 8 are completely discrete and separated from scraping paddles 7, there is no need to replace the pushing assemblies 8 en bloc with the scraping paddles 7 when the scraping paddles 7 need replacing because they have worn out.

Furthermore, the scraping paddles 7 now have a simpler structure, which considerably reduces moulding costs.

In addition, the pushing assemblies 8 allows to exert, on the corresponding scraping paddles 7, a radial thrust f greater than that exertable by the flexible metal tabs, significantly improving the efficiency of the rotatable mixing member 1.

Furthermore, the movable rod 17 is structurally more solid than the metal tabs currently in use, and does not get deformed or damaged when the ice-cream accumulates on the scraping paddle 7 and on the outer lateral edge 5a of the longitudinal blade 5.

Lastly, experimental tests have shown that the particular structure of pushing assemblies 8 considerably reduces the amount of ice-cream that accumulates on the scraping paddles 7, with all the advantages that this entails when rotatable mixing member 1 must be extracted from the creaming tank 103 and washed up.

Last, but not least, the rotatable mixing member 1 can easily be installed even in the batch-freezer machines currently on the market, with all the advantages that this entails.

Clearly, changes may be made to the rotatable mixing member 1 and to the batch-freezer machine 100 described above without, however, departing from the scope of the present invention.

For example, instead of being inserted axially sliding manner inside housing member 14, the movable rod 16 can be inserted in axially sliding manner inside a rectilinear hole 15 directly realized in the body of the longitudinal blade 5, or better in the supporting appendage 13 that cantilevered protrudes from the rear face of longitudinal blade 5 and supports the transversal pin 12.

Thus, in this embodiment, the pushing assembly 8 has no housing member 14.

According to a different embodiment, moreover, the rigid structure 2 shaped like a substantially cylindrical cage may not have the rear hub 4.

## Claims

1. A rotatable mixing member (1) for batch-freezer machines (100) comprising: a rigid structure (2) adapted to be inserted in axially rotatable manner about the longitudinal axis (C) thereof inside the creaming tank (103) of a batch-freezer machine (100), and which is provided with a plurality of plate-like longitudinal blades (5) which are angularly spaced about the longitudinal axis (C) of the rigid structure (2), extend substantially parallel to the longitudinal axis (C) of the rigid structure (2), and are arranged so as to have an outer lateral edge (5a) thereof substantially tangent to/grazing the inner cylindrical surface (103i) of a creaming tank (103); a series of tangential scraping paddles (7) which are located on the longitudinal blades (5) of the rigid structure (2), close to the outer lateral edge (5a) of the individual blades; and a plurality of pushing assemblies (8) adapted to push the individual scraping paddles (7) in elastic manner toward the outside of the rigid structure (2), in abutment on the inner surface (103i) of a creaming tank (103); wherein at least one of said scraping paddles (7) is hinged on the corresponding longitudinal blade (5) close to the outer lateral edge (5a) of the blade, so as to rotate about a rotation axis (D) substantially parallel to the longitudinal axis (C) of the rigid structure (2); **characterized in that** the corresponding pushing member (8) comprises: a movable rod (17) which extends coaxial to a reference axis (E) substantially perpendicular to the longitudinal axis (C) of the rigid structure (2) and misaligned with respect to the rotation axis (D) of the scraping paddle (7), and is inserted in axially sliding manner inside a corresponding rectilinear hole (15) located on the body of the longitudinal blade (5), underneath the scraping paddle (7); and an elastic element (18) which is capable of pushing the movable rod (17) in elastic manner outside the rectilinear hole (15), toward the superjacent scraping paddle (7).

2. A rotatable mixing member according to claim 1, **characterized in that** said scraping paddle (7) is hinged on the corresponding longitudinal blade (5) so as to rotate about a rotation axis (D) substantially parallel to and spaced apart from the outer lateral edge (5a) of the blade, and moreover extends straddling the outer lateral edge (5a) of the corresponding longitudinal blade (5) so as to cantilevered jut out from opposite sides of said longitudinal blade (5).

3. A rotatable mixing member according to claim 2, **characterized in that** said elastic element (18) is adapted to push the movable rod (17) in elastic manner outside the rectilinear hole (15), so that the upper end (17a) of the movable rod (17) rests on the superjacent scraping paddle (7) and moreover exerts a thrust (f) on said scraping paddle (7) such as to raise/move away the scraping paddle from the outer lateral edge (5a) of the longitudinal blade (5).

4. A rotatable mixing member according to any one of the preceding claims, **characterized in that** said rectilinear hole (15) is made in a housing member (14) which is firmly fixed to the body of the longitudinal blade (5), underneath the scraping paddle (7), in eccentric/misaligned position with respect to the rotation axis (D) of the scraping paddle (7).

5. A rotatable mixing member according to claim 4, **characterized in that** said housing member (14) is at least partly inserted/recessed inside a seat (16) made in the body of the longitudinal blade (5).

6. A rotatable mixing member according to claim 5, **characterized in that** said housing member (14) is a substantially cylindrical- and tubular-shaped sleeve, and **in that** the movable rod (17) is inserted in pass-through and axially sliding manner into said sleeve.

7. A rotatable mixing member according to any one of the preceding claims, **characterized in that** said elastic element (18) is accommodated inside said rectilinear hole (15).

8. A rotatable mixing member according to claim 7, **characterized in that** the movable rod (17) is divided into two segments (17b, 17c) having different diameter, and is inserted in an axially sliding manner inside said rectilinear hole (15) with the large-diameter segment (17b) facing the scraping paddle (7) and with the small-diameter segment (17c) facing the bottom of the rectilinear hole (15); and **in that** said elastic element (18) is fitted on the small-diameter segment (17c) of the movable rod (17), inside the rectilinear hole (15), so as to have a first end in abutment on the bottom of the rectilinear hole (15), and a second end in abutment on the annular shoulder joining said small-diameter segment (17c) to said large-diameter segment (17b).

9. A rotatable mixing member according to any one of the preceding claims, **characterized in that** said scraping paddle (7) is pivoted on a transversal rectilinear pin (12) which extends coaxial to the rotation axis (D) of the paddle, and is fixed on a supporting appendage (13) that protrudes cantilevered from a face of the longitudinal blade (5).

10. A rotatable mixing member according to claim 9, **characterized in that** said pushing member (8) is located on said supporting appendage (13) in misaligned position with respect to the rotation axis (D) of the paddle.

11. A rotatable mixing member according to any one of the preceding claims, **characterized in that** said scraping paddle (7) consists of a plate-like body (10) which is flag hinged to the body of the longitudinal blade (5).

12. A rotatable mixing member according to claim 11, **characterized in that** said plate-like body (10) is made of plastic material.

13. A rotatable mixing member according to any one of the preceding claims, **characterized in that** said rigid structure (2) also comprises at least one central hub (3) which is rigidly connected to the longitudinal blades (5) and is structured so as to be pivoted in axially rotatable manner on the bottom of the creaming tank (103).

14. A batch-freezer machine (100) for making ice-cream and the like, comprising: an outer boxlike casing (101); a substantially cylindrical-shaped creaming tank (103) extending inside the boxlike casing (101); a shutter hatch (104) which is movable to and from a closed position in which the body of the hatch (104) is capable of closing/ plugging the mouth/inlet of the creaming tank (103) in a fluid-tight manner; a mixing member (1) inserted in axially rotatable manner inside the creaming tank (103), locally substantially coaxial to the longitudinal axis (A) of the tank; a motor assembly capable of driving the mixing member (1) into rotation inside the creaming tank (103); and a cooling assembly capable of bringing and maintaining the creaming tank (103), and the contents thereof, to/at a temperature below 0°C and preferably ranging between -10°C and -35°C;
the batch-freezer machine (100) **being characterized in that** said mixing member (1) is made according to any one of Claims from 1 to 13.

15. A batch-freezer machine according to claim 14, **characterized in that** the creaming tank (103) extends inside the boxlike casing (101), starting from the front wall (101a) of the boxlike casing (101), while remaining locally coaxial to a reference axis (A) which is substantially horizontal and preferably also locally substantially perpendicular to said front wall (101a).

## Patentansprüche

1. Drehbares Mischelement (1) für Chargen-Gefriermaschinen (100), umfassend: eine starre Struktur (2), welche dafür ausgebildet ist, in den Aufschlagbehälter (103) einer Chargen-Gefriermaschine (100) so eingesetzt zu werden, dass sie um ihre Längsachse (C) axial drehbar ist, und welche mit mehreren plattenförmigen in Längsrichtung verlaufenden Schaufeln (5) ausgestattet ist, welche um die Längsachse (C) der starren Struktur (2) herum in Winkeln beabstandet sind, im Wesentlichen parallel zu der Längsachse (C) der starrten Struktur (2) verlaufen und so angeordnet sind, dass ihre äußere laterale Kante (5a) zu der inneren zylindrischen Fläche (103i) des Aufschlagbehälters (103) im Wesentlichen tangential ist/diese streift; eine Reihe von tangentialen Schabblättern (7), welche an den in Längsrichtung verlaufenden Schaufeln (5) der starren Struktur (2), nahe an der äußeren lateralen Kante (5a) der einzelnen Schaufeln gelegen sind; und mehrere Drückbaugruppen (8), welche dafür ausgebildet sind, die einzelnen Schabblätter (7) elastisch zu der Außenseite der starren Struktur (2) hin zu drücken, in Anlage an der inneren Fläche (103i) des Aufschlagbehälters (103);
wobei
mindestens eines der Schabblätter (7) an der entsprechenden in Längsrichtung verlaufenden Schaufel (5) nahe der äußeren lateralen Kante (5a) der Schaufel drehbar angebracht ist, sodass es sich um eine Drehachse (D) dreht, welche im Wesentlichen parallel zu der Längsachse (C) der starren Struktur ist;
**dadurch gekennzeichnet, dass** das entsprechende Drückelement (8) umfasst: einen bewegbaren Stab (17), welcher koaxial zu einer Referenzachse (E) verläuft, welche im Wesentlichen senkrecht zu der Längsachse (C) der starrten Struktur (2) und gegenüber der Drehachse (D) des Schabblatts (7) nicht-fluchtend ist, und welcher axial verschiebbar in eine entsprechende geradlinige Bohrung (15) eingesetzt ist, welche an dem Körper der in Längsrichtung verlaufenden Schaufel (5) unterhalb des Schabblatts (7) gelegen ist; und ein elastisches Element (18), welches in der Lage ist, den bewegbaren Stab (17) außerhalb der geradlinigen Bohrung (15) auf elastische Weise zu dem darüber gelegenen Schabblatt (7) zu drücken.

2. Drehbares Mischelement nach Anspruch 1, **dadurch gekennzeichnet, dass** das Schabblatt (7) an der entsprechenden in Längsrichtung verlaufenden Schaufel (5) derart drehbar angebracht ist, dass es sich im eine Drehachse (D) dreht, welche im Wesentlichen parallel zu der äußeren lateralen Kante (5a) der Schaufel und von dieser beabstandet ist, und außerdem die äußere Kante (5a) der entsprechenden in Längsrichtung verlaufenden Schaufel (5) überquerend verläuft, sodass es von einander abgewandten Seiten der in Längsrichtung verlaufenden Schaufel (5) auskragend vorspringt.

3. Drehbares Mischelement nach Anspruch 2, **dadurch gekennzeichnet, dass** das elastische Element (18) dafür ausgebildet ist, den bewegbaren Stab (17) außerhalb der geradlinigen Bohrung (15) auf elastische Weise derart zu drücken, dass das obere Ende (17a) des bewegbaren Stabs (17) an dem darüber gelegenen Schabblatt (7) anliegt und außerdem einen Schub (f) auf das Schabblatt (7) ausübt, sodass es das Schabblatt von der äußeren lateralen Kante (5a) der in Längsrichtung verlaufenden Schaufel (5) abhebt/weg bewegt.

4. Drehbares Mischelement nach einem der vorhergehenden Ansprüche, **dadurch gekennzeichnet, dass** die geradlinige Bohrung (15) in einem Aufnahmeelement (14) ausgebildet ist, welches an dem Körper der in Längsrichtung verlaufenden Schaufel (5), unterhalb des Schabblatts (7), an einer gegenüber der Drehachse (D) des Schabblatts (7) exzentrischen/nicht-fluchtenden Position fest angebracht ist.

5. Drehbares Mischelement nach Anspruch 4, **dadurch gekennzeichnet, dass** das Aufnahmeelement (14) mindestens teilweise in einen Sitz (16) eingesetzt/eingelassen ist, welcher in dem Körper der in Längsrichtung verlaufenden Schaufel (5) ausgebildet ist.

6. Drehbares Mischelement nach Anspruch 5, **dadurch gekennzeichnet, dass** das Aufnahmeelement (14) eine im Wesentlichen zylindrische und rohrförmige Hülse ist, und dadurch, dass der bewegbare Stab (17) durchlaufend und axial verschiebbar in die Hülse eingesetzt ist.

7. Drehbares Mischelement nach einem der vorhergehenden Ansprüche, **dadurch gekennzeichnet, dass** das elastische Element (18) in der geradlinigen Bohrung (15) aufgenommen ist.

8. Drehbares Mischelement nach Anspruch 7, **dadurch gekennzeichnet, dass** der bewegbare Stab (17) in zwei Segmente (17b , 17c) mit unterschiedlichem Durchmesser unterteilt ist und axial verschiebbar in die geradlinige Bohrung (15) eingesetzt ist, wobei das Segment (17b) mit großem Durchmesser dem Schabblatt (7) zugewandt ist und das Segment (17c) mit kleinem Durchmesser dem Boden der geradlinigen Bohrung (15) zugewandt ist; und dadurch, dass das elastische Element (18) innerhalb der geradlinigen Bohrung (15) auf das Segment (17c) mit kleinem Durchmesser des bewegbaren Stabs (17) gepasst ist, sodass ein erstes Ende an dem Boden der geradlinigen Bohrung (15) anliegt und ein zweites Ende an der ringförmigen Schulter anliegt, welche das Segment (17c) mit kleinem Durchmesser mit dem Segment (17b) mit großem Durchmesser verbindet.

9. Drehbares Mischelement nach einem der vorhergehenden Ansprüche, **dadurch gekennzeichnet, dass** das Schabblatt (7) auf einem quer verlaufenden geradlinigen Stift (12) drehbar gelagert ist, welcher koaxial zu der Drehachse (D) des Blatts verläuft, und an einem Halteansatz (13) befestigt ist, welcher von einer Fläche der in Längsrichtung verlaufenden Schaufel (5) auskragend vorsteht.

10. Drehbares Mischelement nach Anspruch 9, **dadurch gekennzeichnet, dass** das Drückelement (8) an dem Halteansatz (13) in nicht-fluchtender Position gegenüber der Drehachse (D) des Blatts gelegen ist.

11. Drehbares Mischelement nach einem der vorhergehenden Ansprüche, **dadurch gekennzeichnet, dass** das Schabblatt (7) aus einem plattenförmigen Körper (10) besteht, welcher an dem Körper der in Längsrichtung verlaufenden Schaufel (5) gelenkbandartig angebracht ist.

12. Drehbares Mischelement nach Anspruch 11, **dadurch gekennzeichnet, dass** der plattenförmige Körper (10) aus Kunststoffmaterial besteht.

13. Drehbares Mischelement nach einem der vorhergehenden Ansprüche, **dadurch gekennzeichnet, dass** die starre Struktur (2) auch mindestens eine zentrale Nabe (3) umfasst, welche mit den in Längsrichtung verlaufenden Schaufeln (5) starr verbunden ist und so aufgebaut ist, dass sie axial drehbar an dem Boden des Aufschlagbehälters (103) angebracht ist.

14. Chargen-Gefriermaschine (100) zum Herstellen von Speiseeis und dergleichen, umfassend: ein äußeres kastenförmiges Gehäuse (101); einen im Wesentlich zylindrischen Aufschlagbehälter (103), welcher in dem kastenförmigen Gehäuse (101) verläuft; eine Verschlussklappe (104), welche in eine und aus einer geschlossenen Stellung bewegbar ist, in welcher der Körper der Klappe (104) in der Lage ist, die Mündung/Öffnung des Aufschlagbehälters (103) fluiddicht zu verschließen/verstopfen; ein Mischelement (1), welches, lokal im Wesentlichen koaxial zu der Längsachse (A) des Behälters axial drehbar in den Aufschlagbehälter (103) eingesetzt ist; eine Motorbaugruppe, welche in der Lage ist, das Mischelement (1) in dem Aufschlagbehälter (103) in Drehung zu versetzen; und eine Kühlbaugruppe, welche in der Lage ist, den Aufschlagbehälter (103) und seinen Inhalt auf eine Temperatur unter 0°C, und vorzugsweise zwischen -10°C und -35°C zu bringen und auf dieser zu halten;
wobei die Chargen-Gefriermaschine (100) **dadurch gekennzeichnet ist, dass** das Mischelement (1) gemäß einem der Ansprüche 1 bis 13 ausgebildet ist.

15. Chargen-Gefriermaschine nach Anspruch 14, **dadurch gekennzeichnet, dass** der Aufschlagbehälter (103) in dem kastenförmigen Gehäuse (101) ausgehend von der vorderen Wand (101a) des kastenförmigen Gehäuses (101) verläuft, während er lokal koaxial zu einer im Wesentlichen horizontalen Referenzachse (A) und vorzugsweise auch lokal im Wesentlichen senkrecht zu der vorderen Wand (101a) bleibt.

## Revendications

1. Organe de mélange rotatif (1) pour machines de congélation en lot (100) comprenant : une structure rigide (2) apte à être insérée d'une manière rotative axialement autour de l'axe longitudinal (C) de celle-ci à l'intérieur de la cuve d'écrémage (103) d'une machine de congélation en lot (100), et qui est pourvu d'une pluralité de lames longitudinales en forme de plaque (5) qui sont espacées angulairement autour de l'axe longitudinal (C) de la structure rigide (2), qui s'étendent sensiblement parallèlement à l'axe longitudinal (C) de la structure rigide (2), et qui sont agencées de sorte qu'un bord latéral extérieur (5a) de celles-ci soit sensiblement tangent/arasé à la surface cylindrique intérieure (103i) de la cuve d'écrémage (103) ; une série de pales de raclage tangentielles (7) qui sont situées sur les lames longitudinales (5) de la structure rigide (2), à proximité du bord latéral extérieur (5a) des lames individuelles ; et une pluralité d'assemblages de poussée (8) aptes à pousser les pales de raclage individuelles (7) de manière élastique vers l'extérieur de la structure rigide (2), pour venir en butée sur la surface intérieure (103i) d'une cuve d'écrémage (103) ; dans lequel au moins l'une desdites pales de raclage (7) est articulée sur la lame longitudinale correspondante (5) à proximité du bord latéral extérieur (5a) de la lame, de manière à tourner autour d'un axe de rotation (D) sensiblement parallèle à l'axe longitudinal (C) de la structure rigide (2) ; **caractérisé en ce que** l'organe de poussée correspondant (8) comprend : une tige mobile (17) qui s'étend coaxialement à un axe de référence (E) sensiblement perpendiculaire à l'axe longitudinal (C) de la structure rigide (2) et non aligné avec l'axe de rotation (D) de la pale de raclage (7), et est insérée en coulissement axial à l'intérieur d'un trou rectiligne correspondant (15) situé sur le corps de la lame longitudinale (5), sous la pale de raclage (7) ; et un élément élastique (18) qui est capable de pousser la tige mobile (17) de manière élastique à l'extérieur du trou rectiligne (15), vers la pale de raclage (7) se trouvant au-dessus.

2. Organe de mélange rotatif selon la revendication 1, **caractérisé en ce que** ladite pale de raclage (7) est articulée sur la lame longitudinale correspondante (5) de manière à tourner autour d'un axe de rotation (D) sensiblement parallèle au bord latéral extérieur (5a) de la lame dont il est espacé, et s'étend en outre en chevauchant le bord latéral extérieur (5a) de la lame longitudinale correspondante (5) en porte-à-faux en débordant de côtés opposés de ladite lame longitudinale (5).

3. Organe de mélange rotatif selon la revendication 2, **caractérisé en ce que** ledit élément élastique (18) est apte à pousser la tige mobile (17) de manière élastique à l'extérieur du trou rectiligne (15), de sorte que l'extrémité supérieure (17a) de la tige mobile (17) repose sur la pale de raclage (7) se trouvant au-dessus et exerce en outre une poussée (f) sur ladite pale de raclage (7) de manière à soulever/éloigner la pale de raclage du bord latéral extérieur (5a) de la lame longitudinale (5).

4. Organe de mélange rotatif selon l'une quelconque des revendications précédentes, **caractérisé en ce que** ledit trou rectiligne (15) est constitué dans un organe de boîtier (14) qui est fermement fixé au corps de la lame longitudinale (5), au-dessous de la pale de raclage (7), à une position excentrée/non alignée par rapport à l'axe de rotation (D) de la pale de raclage (7).

5. Organe de mélange rotatif selon la revendication 4, **caractérisé en ce que** ledit organe de boîtier (14) est au moins partiellement inséré/évidé à l'intérieur d'un siège (16) constitué dans le corps de la lame longitudinale (5).

6. Organe de mélange rotatif selon la revendication 5, **caractérisé en ce que** ledit organe de boîtier (14) est une gaine de forme sensiblement cylindrique et tubulaire, et **en ce que** la tige mobile (17) est insérée en traversant et en coulissant axialement dans ladite gaine.

7. Organe de mélange rotatif selon l'une quelconque des revendications précédentes, **caractérisé en ce que** ledit élément élastique (18) est logé à l'intérieur dudit trou rectiligne (15).

8. Organe de mélange rotatif selon la revendication 7, **caractérisé en ce que** la tige mobile (17) est divisée en deux segments (17b, 17c) de diamètres différents, et est insérée en coulissement axial à l'intérieur dudit trou rectiligne (15) avec le segment de grand diamètre (17b) face à la pale de raclage (7) et avec le segment de petit diamètre (17c) face au fond du trou rectiligne (15) ; et **en ce que** ledit élément élastique (18) est ajusté sur le segment de petit diamètre (17c) de la tige mobile (17), à l'intérieur du trou rectiligne (15), de manière à avoir une première extrémité venant en butée contre le fond du trou rectiligne (15), et une deuxième extrémité venant en butée contre l'épaulement annulaire raccordant ledit segment de petit diamètre (17c) audit segment de grand diamètre (17b).

9. Organe de mélange rotatif selon l'une quelconque des revendications précédentes, **caractérisé en ce que** ladite pale de raclage (7) est pivotée sur une broche rectiligne transversale (12) qui s'étend coaxialement à l'axe de rotation (D) de la pale, et est fixée sur un appendice de support (13) faisant saillie en porte-à-faux depuis une face de la lame longitudinale (5).

10. Organe de mélange rotatif selon la revendication 9, **caractérisé en ce que** ledit organe de poussée (8) est situé sur ledit appendice de support (13) à une position non alignée avec l'axe de rotation (D) de la pale.

11. Organe de mélange rotatif selon l'une quelconque des revendications précédentes, **caractérisé en ce que** ladite pale de raclage (7) se compose d'un corps en forme de plaque (10) qui est articulé en drapeau sur le corps de la lame longitudinale (5).

12. Organe de mélange rotatif selon la revendication 11, **caractérisé en ce que** ledit corps en forme de plaque (10) est constitué de matière plastique.

13. Organe de mélange rotatif selon l'une quelconque des revendications précédentes, **caractérisé en ce que** ladite structure rigide (2) comprend également au moins un moyeu central (3) qui est relié rigidement aux lames longitudinales (5) et est structuré afin de pivoter de manière rotative axialement au fond de la cuve d'écrémage (103).

14. Machine de congélation en lot (100) pour la fabrication de crème glacée et de substances similaires, comprenant : un carter extérieur en forme de caisson (101) ; une cuve d'écrémage de forme sensiblement cylindrique (103) s'étendant à l'intérieur du carter en forme de caisson (101) ; une trappe à volet (104) qui est mobile vers et depuis une position fermée à laquelle le corps de la trappe (104) est capable de fermer/boucher l'embouchure/l'entrée de la cuve d'écrémage (103) de manière étanche au fluide ; un organe de mélange (1) inséré de manière à pouvoir tourner axialement à l'intérieur de la cuve d'écrémage (103), sensiblement coaxial localement à l'axe longitudinal (A) de la cuve ; un assemblage moteur capable de faire tourner l'organe de mélange (1) à l'intérieur de la cuve d'écrémage (103) ; et un assemblage de refroidissement capable d'amener et de maintenir la cuve d'écrémage (103) et son contenu à une température inférieure à 0 °C et de préférence entre -10 °C et -35 °C ;
la machine de congélation en lot (100) étant **caractérisée en ce que** ledit organe de mélange (1) est constitué selon l'une quelconque des revendications 1 à 13.

15. Machine de congélation en lot selon la revendication 14, **caractérisée en ce que** la cuve d'écrémage (103) s'étend à l'intérieur du carter en forme de caisson (101), à partir de la paroi frontale (101a) du carter en forme de caisson (101), tout en restant localement coaxiale à un axe de référence (A) qui est sensiblement horizontal et de préférence également sensiblement perpendiculaire localement à ladite paroi frontale (101a).
